# EUROPÄISCHE PATENTSCHRIFT

(11) **EP 2 887 030 B1**
(45) Veröffentlichungstag und Bekanntmachung des Hinweises auf die Patenterteilung: **23.11.2016**
(21) Anmeldenummer: 13198785.1
(22) Anmeldetag: 20.12.2013
(51) Int. Cl.: G01H 9/00, F03D 17/00

(54) **Vorrichtung und Verfahren zur Messung von Schwingungen eines bewegten Objektes**
Method and device for measuring oscillations of a moving object
Dispositif et procédé de mesure de vibrations d'un objet en mouvement

(43) Veröffentlichungstag der Anmeldung: 24.06.2015
(73) Patentinhaber: Fraunhofer Gesellschaft zur Förderung der angewandten Forschung e.V., 80686 München (DE)
(72) Erfinder: Scherer, Clemens, 76137 Karlsruhe (DE); Lutzmann, Peter, 73337 Bad Überkingen (DE); Scherer-Negenborn, Norbert, 76137 Karlsruhe (DE)
(74) Vertreter: Friese Goeden Patentanwälte PartGmbB

(56) Entgegenhaltungen:
- WO-A2-2011/009459
- CN-A- 103 364 072
- DE-A1-102007 023 826
- P. LUTZMANN; B. GÖHLER; F. VAN PUTTEN; C.A. HILL: "Laser Vibration Sensing: Overview and Applications", PROC. OF SPIE, Bd. 8186, 6. Oktober 2011 (2011-10-06), XP060010205,

## Beschreibung

Die Erfindung betrifft eine Vorrichtung und ein Verfahren zur Messung von Schwingungen zumindest eines bewegten Objektes, mit zumindest einem Laser, welcher dazu eingerichtet ist, Laserstrahlung auszusenden und mit zumindest einer Kamera, welche dazu eingerichtet ist, das bewegte Objekt zu erfassen, und mit zumindest einem Empfänger, welcher dazu eingerichtet ist, zumindest einen Teil der Laserstrahlung zu erfassen. Vorrichtungen und Verfahren der eingangs genannten Art können dazu verwendet werden, schwingungsfähige Systeme berührungsfrei zu vermessen.

Aus P. Lutzmann, B. Göhler, F. van Putten und C.A. Hill: "Laser Vibration Sensing: Overview and Applications", Proc. of SPIE, Vol. 8186 ist bekannt, ein Laserradar zur Schwingungserfassung einzusetzen. Hierzu ist ein Laserempfänger und eine Laserlichtquelle in einem Gehäuse integriert, so dass von einem Gegenstand reflektierte Laserstrahlung erfasst werden kann. Durch Auswertung des empfangenen Signals kann der sich zeitlich ändernde Abstand zwischen der Messeinrichtung und dem zu vermessenden Objekt erfasst werden, so dass die Schwingungsamplitude gegen die Zeit gemessen werden kann. Sofern Schwingungen an bewegten Objekten gemessen werden sollen, muss der Laser und der Erfassungsbereich des Empfängers dem sich bewegenden Objekt nachgeführt werden. Hierzu schlägt der Stand der Technik vor, die Messeinrichtung auf einen motorisierten Schwenkkopf zu montieren und den Erfassungsbereich der Messvorrichtung nachzuführen.

Dieses bekannte System weist jedoch den Nachteil auf, dass die Messung fehleranfällig ist, wenn die Nachführung nicht exakt erfolgt. Sofern Sichtbehinderungen zwischen der Messvorrichtung und dem zu vermessenden Objekt vorliegen, beispielsweise während der Nacht, bei Nebel oder Schneefall, kann die Verfolgung des Objektes unmöglich werden.

Ausgehend vom Stand der Technik liegt der Erfindung somit die Aufgabe zugrunde, eine Vorrichtung und ein Verfahren zur Messung von Schwingungen an bewegten Objekten anzugeben, welches einfacher durchführbar ist und eine größere Genauigkeit aufweist.

Die Aufgabe wird erfindungsgemäß durch eine Vorrichtung gemäß Anspruch 1 und ein Verfahren gemäß Anspruch 11 gelöst.

Erfindungsgemäß wird vorgeschlagen, zur Messung von Schwingungen zumindest eines bewegten Objektes eine Vorrichtung einzusetzen, welche zumindest einen Laser, zumindest eine Kamera und zumindest einen Empfänger enthält. Der Laser ist dazu eingerichtet, Laserstrahlung auszusenden. In einigen Ausführungsformen der Erfindung kann die Laserstrahlung gepulst ausgesendet werden, beispielsweise mit einer Pulslänge von weniger als 1 µs, weniger als 100 Nanosekunden oder weniger als einer 1 Nanosekunde. In anderen Ausführungsformen der Erfindung kann ein Dauerstrichlaser eingesetzt werden, welcher Laserstrahlung kontinuierlich abgibt.

Die Wellenlänge der Laserstrahlung kann so gewählt sein, dass die Absorption in Wasser minimal ist, so dass die Reichweite in der Atmosphäre maximiert ist. In einigen Ausführungsformen der Erfindung kann die Wellenlänge der Laserstrahlung so gewählt sein, dass eine möglichst geringe Schädigung eintritt, wenn die Laserstrahlung auf Personen oder Tiere trifft. In einigen Ausführungsformen der Erfindung kann die Wellenlänge bei etwa 1,5 µm, etwa 2 µm oder etwa 10,6 µm liegen.

Die Laserstrahlung trifft bei Betrieb der Vorrichtung zumindest teilweise auf ein bewegtes Objekt und wird von dessen Oberfläche zumindest teilweise reflektiert. Der reflektierte Anteil kann zumindest teilweise vom Empfänger nachgewiesen werden. Aus dem Signal des Empfängers kann der Abstand zwischen der Vorrichtung und dem zu vermessenden Objekt und/oder die Änderung des Abstandes zwischen der Vorrichtung und dem zu vermessenden Objekt bestimmt werden. Sofern sich dieser Abstand zeitlich ändert, können die Amplituden, die Phasen und die Frequenzen der Schwingung des bewegten Objektes bestimmt werden.

Weiterhin weist die erfindungsgemäß vorgeschlagene Vorrichtung eine Kamera auf, welche dazu eingerichtet ist, das bewegte Objekt zu erfassen. Die Kamera kann eine Digitalkamera sein, welche beispielsweise mittels eines CCD-Chips Bildinformationen als digitalen Datenstrom bereitstellt. Der das bewegte Objekt repräsentierende Datenstrom wird zumindest einer Nachführeinrichtung zugeführt, welche die Bilddaten auswertet und daraus ein Ansteuersignal einer Strahlführungseinrichtung erzeugt. Die Strahlführungseinrichtung beeinflusst die Richtung und damit den Auftreffort der vom Laser ausgesandten Laserstrahlung. Somit kann durch die erfindungsgemäße Vorrichtung der Laserstrahl auf das bewegte Objekt bzw. eine vorgebbare Teilfläche des bewegten Objektes gelenkt werden. Da dies voll automatisiert erfolgt, kann die erfindungsgemäße Vorrichtung auch für Langzeitüberwachungen bzw. Dauerüberwachungen eingesetzt werden, welche beispielsweise für die Überprüfung von Lebensdauererwartungen schwingungsbelasteter Bauteile einsetzbar sind. In anderen Anwendungsfällen der Erfindung können die gemessenen Schwingungsdaten zur Überprüfung und/oder Verbesserung von Simulationsmodellen dienen.

Die erfindungsgemäße Vorrichtung und das erfindungsgemäße Verfahren weisen den Vorteil auf, dass die Vorrichtung nicht zwingend eine exakte axiale Positionierung zum zu vermessenden Objekt benötigt. In einigen Ausführungsformen der Erfindung kann der mit dem auch bei Winkel von etwa -30° bis etwa +30° einschließen. Hierdurch können beispielsweise Schwingungen an Windenergieanlagen mit Nabenhöhen von mehr als 100 m oder mehr als 150 m vermessen werden.

In einigen Ausführungsformen kann die Strahlführungseinrichtung eine bewegliche Plattform aufweisen. In einigen Ausführungsformen der Erfindung kann die Bewegung durch zumindest eine Schwenk-/Neigeeinrichtung vermittelt werden. Die Schwenk-/Neigeeinrichtung kann beispielsweise durch ein Hexapod oder ein Goniometer realisiert sein. Die bewegliche Plattform kann automatisiert bewegbar sein, beispielsweise durch einen elektromotorischen, pneumatischen, hydraulischen oder piezoelektrischen Antrieb. Ein elektrisches Ansteuersignal für die bewegliche Plattform wird erfindungsgemäß von der Nachführeinrichtung ermittelt und an die Strahlführungseinrichtung ausgegeben. In einigen Ausführungsformen der Erfindung kann die bewegliche Plattform den Laser, die Kamera und den Empfänger tragen, so dass alle Komponenten gleichförmig bewegt werden. In anderen Ausführungsformen der Erfindung kann der Laser und der Empfänger und optional die Kamera auf zwei oder drei Schwenk-/Neigeeinrichtungen montiert sein, so dass die Bewegung eines jeden Bauteils separat ermittelt und auf den gewünschten Sollwert geregelt wird. In einigen Ausführungsformen der Erfindung kann die Kamera auch stationär unabhängig von der beweglichen Plattform montiert sein.

In einigen Ausführungsformen der Erfindung kann die Strahlführungseinrichtung zumindest einen beweglichen Spiegel enthalten. In anderen Ausführungsformen der Erfindung kann die Strahlführungseinrichtung zumindest einen räumlichen Lichtmodulator enthalten. Diese Strahlführungseinrichtungen können sich durch eine erhöhte Stellgeschwindigkeit auszeichnen, da nicht die gesamte, voluminöse Vorrichtung bewegt werden muss, sondern lediglich die vom Laser ausgehende Laserstrahlung durch kleine und leichte Ablenkspiegel in die gewünschte Richtung gelenkt wird.

In einigen Ausführungsformen der Erfindung können der Laser und der Empfänger in einer bistatischen Anordnung angeordnet sein. Eine bistatische Anordnung soll für die Zwecke der vorliegenden Erfindung dadurch gekennzeichnet sein, dass der Laser und der Empfänger durch einen vorgebbaren Abstand voneinander getrennt sind.

In einigen Ausführungsformen der Erfindung können der Laser und der Empfänger in einer monostatischen Anordnung angeordnet sein. In diesem Fall fallen die optischen Achsen des Lasers und der Akzeptanzbereich des Empfängers zusammen, d.h. der optische Sende- und der Empfangsweg liegen aufeinander. Von einer monostatischen bzw. quasi monostatischen Anordnung kann auch dann gesprochen werden, wenn die optischen Achsen technisch bedingt einen kleinen Winkel zueinander einschließen, welcher beispielsweise kleiner ist als etwa 2°, kleiner als etwa 1° oder kleiner als etwa 0,5°.

In einigen Ausführungsformen der Erfindung können die Laserstrahlung und die Sichtachse der Kamera in Deckung sein. Hierdurch kann ein Parallaxenfehler vermieden werden.

In einigen Ausführungsformen der Erfindung können der Laser und die Kamera über einen Strahlteiler zusammenwirken. Hierdurch kann ein Paralaxenfehler vermieden werden, da Laser und Kamera räumlich voneinander getrennt angeordnet werden können, und dennoch die jeweiligen optischen Achsen zusammenfallen.

In einigen Ausführungsformen der Erfindung können der Laser und die Kamera paralaktisch angeordnet sein. Eine solche Anordnung kann einfach und mit geringem Justageaufwand realisiert werden, wobei zusätzliche optische Komponenten eingespart werden können. Hierdurch kann die erfindungsgemäße Vorrichtung besonders leicht und mit geringem Bauraum realisiert werden, so dass durch die geringen bewegten Massen eine rasche Nachführung mit einer Schwenk-/Neigeeinrichtung erfolgen kann.

In einigen Ausführungsformen der Erfindung kann die Nachführeinrichtung eine Phasenregelschleife aufweisen. Hierdurch kann eine zuverlässige Nachführung der Vorrichtung sichergestellt werden, so dass die Schwingungsanalyse stets an der gewünschten Teilfläche des bewegten Objekts durchgeführt wird.

In einigen Ausführungsformen der Erfindung kann die Nachführeinrichtung einen Trackingalgorithmus enthalten. In einigen Ausführungsformen der Erfindung kann der Trackingalgorithmus eine Bewegungsvorhersage einschließen. Dies erlaubt die Nachverfolgung des bewegten Objekts und damit die präzise Schwingungsanalyse auch bei komplexen Bewegungen und/oder mit erhöhter Genauigkeit.

In einigen Ausführungsformen der Erfindung kann der Empfänger dazu eingerichtet sein, eine Signallaufzeit und/oder Speckleinterferenzen und/oder projizierte Muster zu erkennen. In einigen Ausführungsformen der Erfindung kann der Empfänger dazu eingerichtet sein, einen Abstand oder eine Abstandsänderung durch Auswertung von Signalmodulationsinformation zu erhalten.

In einigen Ausführungsformen der Erfindung kann das Empfängersignal einer Einrichtung zur Dopplerkompensation zugeführt werden, so dass Signalanteile, welche durch den Dopplereffekt des sich bewegenden Objektes hervorgerufen werden aus dem Signal entfernt werden können. Hierdurch kann die Schwingung des bewegten Objektes mit größerer Zuverlässigkeit erfasst werden. In einigen Ausführungsformen der Erfindung kann ein in der Nachführeinrichtung gewonnenes Dopplersignal zur Steuerung der Dopplerkompensation verwendet werden. Hierzu kann ein bildbasierter Tracking-Algorithmus in Prädiktion eingesetzt werden.

Nachfolgend soll die Erfindung anhand von Figuren ohne Beschränkung des allgemeinen Erfindungsgedankens näher erläutert werden. Dabei zeigt
Fig. 1 eine schematische Darstellung der erfindungsgemäßen Messvorrichtung.
Fig. 2 zeigt ein Ausführungsbeispiel einer Strahlführungseinrichtung.
Fig. 3 zeigt ein Beispiel der Vorrichtung in monostatischer Anordnung.
Fig. 4 zeigt ein Beispiel der Vorrichtung in bistatischer Anordnung.
Fig. 5 zeigt das Zusammenwirken eines Lasers und einer Kamera über einen Strahlteiler.
Fig. 6 zeigt ein Flussdiagramm eines Trackingalgorithmus gemäß einer Ausführungsform der Erfindung

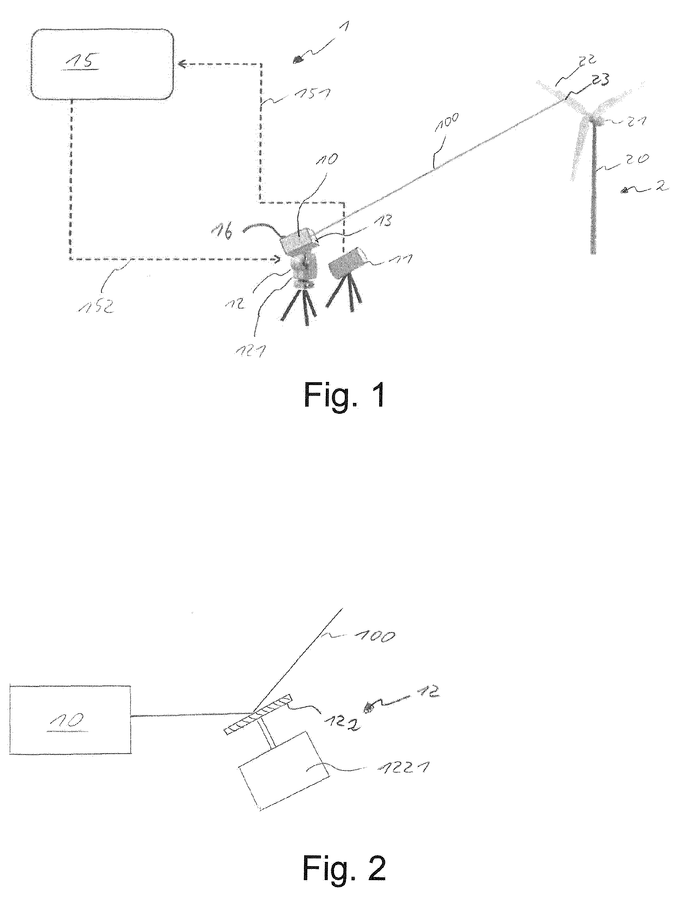

Fig. 1 zeigt einen beispielhaften Aufbau der erfindungsgemäßen Vorrichtung 1. Im dargestellten Ausführungsbeispiel soll die Vorrichtung 1 dazu verwendet werden, Schwingungen eines bewegten Objekts 22 zu vermessen. Im dargestellten Ausführungsbeispiel ist das Objekt 22 ein Flügel eines Rotorsterns einer Windenergieanlage 2. Die Windenergieanlage 2 weist einen Turm 20 auf, dessen unteres Ende in einem Fundament befestigt ist. Das obere Ende des Turms 20 trägt eine Gondel 21, welche den Generator der Windkraftanlage beherbergt. Daneben kann die Gondel 21 weitere Baugruppen aufnehmen, beispielsweise ein Rotorlager, ein optionales Getriebe, eine Klimaanlage, Umrichter oder weitere, nicht explizit genannte Komponenten. Die Gondel 21 ist drehbar am Turm 20 befestigt, so dass der Rotor 22 an wechselnde Windrichtungen anpassbar ist.

Die Windenergieanlage 2 weist eine Vielzahl schwingungsfähiger Bauteile auf. So kann beispielsweise der Turm 20 durch die anliegende Windströmung zu Schwingungen angeregt werden. Weiterhin kann die Gondel 21 zur Schwingungen angeregt werden. Schließlich können die Rotorblätter 22 des Rotorsterns unterschiedliche Schwingungsmoden aufweisen. Unterschiedliche Schwingungen einzelner Bauteile der Windenergieanlage 2 können bei unterschiedlichen Windstärken und/oder Anströmrichtungen angeregt werden. Die Schwingungen können zu Materialermüdung führen und auf diese Weise die Betriebsfestigkeit der Windenergieanlage 2 wesentlich beeinflussen.

In begrenztem Umfang können Schwingungsmoden der Windenergieanlage 2 berechnet und auf diese Weise in die Dimensionierung und Lebensdauerberechnung einbezogen werden. Daneben ist es jedoch wünschenswert, die Schwingungen der Windenergieanlage auch messtechnisch zu erfassen. Damit können einerseits die gewählten Rechenmodelle verifiziert werden und andererseits Messungen zur Vorhersage der zu erwartenden Restlebensdauer durchgeführt werden, beispielsweise um über die Änderung der Schwingungsmoden Abschätzungen über die verbleibende Restlebensdauer einzelner Bauteile zu erhalten.

Auch wenn in Fig. 1 beispielhaft eine Windenergieanlage 2 dargestellt ist, so kann das erfindungsgemäße Verfahren und die erfindungsgemäße Vorrichtung selbstverständlich auch für andere Baugruppen eingesetzt werden. Beispielsweise können auch Schwingungen an Fahr- oder Flugzeugen, Kirchtürmen oder anderen Gebäuden oder beliebigen anderen schwingungsfähigen Systemen durchgeführt werden, welche sich im Erfassungsbereich der Vorrichtung 1 bewegen.

Fig. 1 zeigt beispielhaft die Durchführung von Schwingungsanalysen am Rotorblatt 22 der Windenergieanlage 2. Hierzu wird der Ort einer Teilfläche 23 über die Zeit gemessen. Bei Betrieb der Windenergieanlage 2 rotiert der Rotorstern, so dass die Vorrichtung 1 nachgeführt werden muss, um die Teilfläche 23 fortwährend zuverlässig zu erfassen.

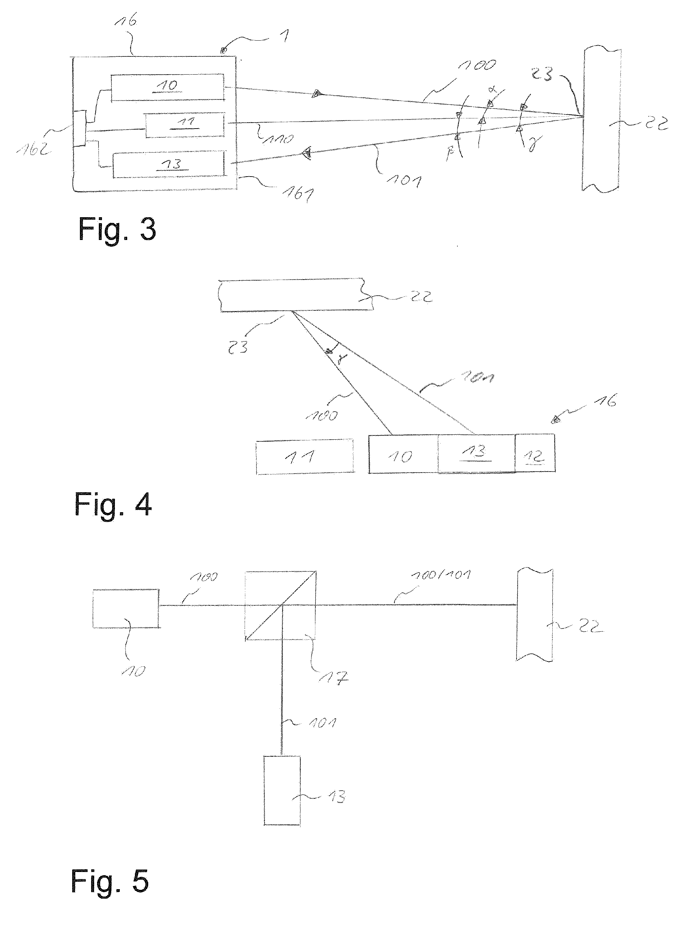

Die eigentliche Messeinrichtung ist im Gehäuse 16 angeordnet, wie anhand von Fig. 5 näher erläutert wird. Im Gehäuse 16 befindet sich ein Laser 10, welcher Laserstrahlung 100 aussenden kann. Die Laserstrahlung 100 kann kontinuierlich oder gepulst ausgesendet werden. Die Wellenlänge der Laserstrahlung 100 kann aus den atmosphärischen Fenstern gewählt sein und beispielsweise etwa 1,5 µm, etwa 2 µm oder etwa 10,6 µm betragen.

Die Laserstrahlung 100 wird an einer Teilfläche 23 des Rotorblattes 22 reflektiert und erreicht einen Empfänger 13. Der Empfänger 13 wandelt das optische Signal in ein elektrisches Signal, welches nachfolgend einer Auswerteeinheit zugeführt wird, um aus der Signallaufzeit, einem Interferenzmuster, einem projizierten Muster oder mit anderen, hier nicht genannten Verfahren die Schwingung der Teilfläche 23 des bewegten Objektes 22 zu bestimmen. Weiterhin kann die Auswerteeinrichtung eine Korrektureinheit zur Kompensation des Dopplereffektes enthalten, so dass die Schwingungen mit größerer Genauigkeit bestimmt werden können. Sofern unterschiedliche Teilflächen 23 entlang der Längserstreckung des Rotorblattes 22 vermessen werden, kann eine vollständige Analyse sämtlicher Schwingungsmoden des Rotorblattes durchgeführt werden. Hierzu können unterschiedliche Teilflächen 23 sequentiell nach einem vorgegebenen Muster vermessen werden. In einigen Ausführungsformen kann das Muster in der Nachführeinrichtung 15 gespeichert sein und im Betrieb der Vorrichtung abgerufen werden.

Um den Laser 10 und den Empfänger 13 bei Bewegung des Rotorblattes 22 nachzuführen, ist eine Kamera 11 vorhanden. Die Kamera 11 ist bevorzugt eine Digitalkamera, welche Bilddaten erfasst und als digitalen Datenstrom über die Leitung 151 ausgibt. Im dargestellten Ausführungsbeispiel ist die Kamera 11 unbeweglich auf einem zugeordneten Stativ montiert. Die Kamera 11 kann dazu eingerichtet sein, fortlaufend Bilder der Windenergieanlage 2 aufzunehmen, auf welchen zumindest der Strahlfleck der Laserstrahlung 100 auf dem Rotorblatt 22 sichtbar ist. Sofern die Laserstrahlung 100 im infraroten Spektralbereich gewählt ist, kann auch die Kamera 11 eine Infrarotkamera sein. In anderen Ausführungsformen der Erfindung kann eine Laserstrahlung 100 im infraroten Spektralbereich zur Messung der Schwingung verwendet werden, während ein zweiter Laser einen parallelen Laserstrahl in einem anderen Spektralbereich aussendet, welcher mit der Kamera 11 erfasst werden kann. In einigen Ausführungsformen der Erfindung kann der zweite Laser sichtbares Licht aussenden.

Die Bilddaten der Kamera 11 werden der Nachführeinrichtung 15 zugeführt. Die Nachführeinrichtung 15 kann eine Einrichtung zur digitalen Bildverarbeitung enthalten. Die digitale Bildverarbeitung kann beispielsweise mit einer Phasenregelschleife oder einem Trackingalgorithmus oder einer Bewegungsvorhersageeinrichtung die zeitliche Entwicklung des Ortes der Teilfläche 23 vorhersagen. Hierzu kann die Nachführeinrichtung 15 einen Mikroprozessor oder einen Mikrocontroller und eine Software enthalten. Aus der zeitlichen Veränderung des Ortes der Teilfläche 23 generiert die Nachführeinrichtung 15 ein Ansteuersignal, welches einer Strahlführungseinrichtung 12 zugeführt werden kann. Hierzu ist die Nachführeinrichtung 15 über die Leitung 152 mit der Strahlführungseinrichtung 12 verbunden. Die Strahlführungseinrichtung 12 beeinflusst die Ausbreitungsrichtung der Laserstrahlung 100 so, dass der Laser fortwährend auf der Teilfläche 23 auftrifft.

Im dargestellten Ausführungsbeispiel enthält die Strahlführungseinrichtung 12 eine Schwenk-/Neigeeinrichtung 121, welche zwischen dem Gehäuse 16 und dem Stativ angeordnet ist. Die Schwenk-/Neigeeinrichtung kann den Winkel und optional den Ort des Gehäuses 16 an vorgebbare Sollwerte anpassen. Hierzu kann die Schwenk-/Neigeeinrichtung 121 einen Hexapod und/oder ein Mehrachsengoniometer enthalten. Durch die automatisierte Nachführung an die Bewegung der Teilfläche 23 des bewegten Objektes 22 kann die erfindungsgemäße Vorrichtung eine höhere Genauigkeit aufweisen. Weiterhin eignet sich die erfindungsgemäße Vorrichtung auch zur Langzeit- oder Dauerüberwachung der schwingungsbelasteten Struktur, beispielsweise der Windenergieanlage 2. Aufgrund der Reichweite der Laserstrahlung 100, welche beispielsweise größer als 50 m, größer als 100 m, größer als 200 m, größer als 300 m oder größer als 1000 m sein kann, eignet sich die erfindungsgemäße Vorrichtung auch zur Überwachung einer Mehrzahl von Windenergieanlagen 2, indem nach Abschluss der Messung an einer ersten Windenergieanlage die Schwenk-/Neigeeinrichtung 121 die Vorrichtung auf eine zweite Windenergieanlage ausrichtet. Auf diese Weise können Betriebsdaten für eine Mehrzahl von Windenergieanlagen kontinuierlich gesammelt werden, um eine Abschätzung der Restlebensdauer eines Windparks zu ermöglichen oder das Verhalten des Windparks bei verschiedenen Windstärken oder Windrichtungen zu studieren.

Fig. 2 zeigt eine alternative Strahlführungseinrichtung 12. Fig. 2 zeigt einen Laser 10, welcher Laserstrahlung 100 aussendet. Die Laserstrahlung 100 wird an der Oberfläche eines Spiegels 122 reflektiert. Der Spiegel 122 ist in zumindest einer Achse verschwenkbar bzw. neigbar. Die Neigung des Spiegels 122 ist über einen zugeordneten Antrieb 1221 variierbar. Der Antrieb 1221 kann beispielsweise einen Piezosteller enthalten. Sofern dem Antrieb 1221 ein Ansteuersignal der Nachführeinrichtung 15 zugeführt wird, kann dieser dazu eingesetzt werden, die Laserstrahlung 100 in eine vorgebbare Richtung abzulenken, so dass die Laserstrahlung 100 das bewegte Objekt 22 bzw. die darauf befindliche Teilfläche 23 verfolgt.

Da der Spiegel 122 im Regelfall eine geringere Masse aufweist als das Gehäuse 16 mit den darin angeordneten Komponenten, kann die Strahlführungseinrichtung 12 gemäß Fig. 2 eine höhere Stellgeschwindigkeit aufweisen als die Schwenk-/Neigeeinrichtung 121, so dass mit der in Fig. 2 dargestellten Ausführungsform auch schnell bewegende Objekte verfolgt werden können, beispielsweise Verdichterschaufeln einer Turbine oder Rotorblätter eines Flugzeuges oder eines Hubschraubers.

Fig. 3 zeigt ein Ausführungsbeispiel für eine bistatische Anordnung des Lasers 10, des Empfängers 13 und der Kamera 11. Der Laser 10, der Empfänger 13 und die Kamera 11 können in einem gemeinsamen Gehäuse 16 angeordnet sein, welches ein Sichtfenster 161 aufweist, um den Ein- und Austritt der Laserstrahlung zu ermöglichen und der Kamera 11 ein freies Sichtfeld auf das bewegte Objekt 22 zu ermöglichen. Im rückwärtigen Teil des Gehäuses 16 befindet sich ein Steckverbinder 162, über welchen dem Laser 10, dem Empfänger 13 und der Kamera 11 eine Versorgungsspannung zugeführt werden kann und Datensignale aus dem Gehäuse 16 herausgeführt werden können. Optional können auch weitere Bauteile im Gehäuse 16 angeordnet sein, beispielsweise die Nachführeinrichtung 15. In anderen Ausführungsformen der Erfindung kann die Kamera 11 außerhalb des Gehäuses 16 angeordnet sein, so dass das Gehäuse nur den Laser 10 und den Empfänger 13 und optional die Nachführeinrichtung 15 enthält.

Das Gehäuse 16 kann über eine in Fig. 3 nicht dargestellte Schwenk-/Neigeeinrichtung auf einem Stativ befestigt werden, um den Erfassungsbereich der Vorrichtung 1 den Bewegungen des bewegten Objektes 22 nachzuführen.

Die Sichtachse 110 der Kamera 11 und die Ausbreitungsrichtung der Laserstrahlung 100 schließen einen Winkel α ein. Bei einer großen Entfernung zwischen dem Fenster 161 und dem zu vermessenden Objekt 22 und geringem Abstand zwischen dem Laser 10 und der Kamera 11 kann der Winkel α zwischen der Laserstrahlung 100 und der Sichtachse 110 in einigen Ausführungsformen der Erfindung sehr klein werden, beispielsweise weniger als etwa 1°, weniger als etwa 0,5° oder weniger als etwa 0,2°.

Weiterhin zeigt Fig. 3 eine bistatische Anordnung des Lasers 10 und den Empfängers 13. Die vom Laser 10 ausgesendete Laserstrahlung 100 wird an der Teilfläche 23 des bewegten Objektes 22 reflektiert und die reflektierte Strahlung 101 wird vom Empfänger 13 nachgewiesen. Die Ausbreitungsrichtung der reflektierten Strahlung 101 und die Ausbreitungsrichtung der Laserstrahlung 100 schließen einen Winkel γ ein. Bei einer großen Entfernung zwischen dem Fenster 161 und dem zu vermessenden Objekt 22 bzw. der Teilfläche 23 und geringem Abstand zwischen dem Laser 10 und dem Empfänger 13 kann der Winkel γ zwischen der Laserstrahlung 100 und der reflektierten Strahlung 101 in einigen Ausführungsformen der Erfindung sehr klein werden, beispielsweise weniger als etwa 1°, weniger als etwa 0,5° oder weniger als etwa 0,2°.

Die Sichtachse 110 der Kamera 11 und die Ausbreitungsrichtung der reflektierten Laserstrahlung 101 schließen einen Winkel β ein. Bei einer großen Entfernung zwischen dem Fenster 161 und dem zu vermessenden Objekt 22 und geringem Abstand zwischen dem Empfänger 13 und der Kamera 11 kann der Winkel β in einigen Ausführungsformen der Erfindung sehr klein werden, beispielsweise weniger als etwa 1°, weniger als etwa 0,5° oder weniger als etwa 0,2°.

Fig. 4 zeigt ein Ausführungsbeispiel einer bistatischen Anordnung. Die bistatische Anordnung zeichnet sich dadurch aus, dass der Laser 10 in einem separaten Gehäuse räumlich vom Empfänger 13 getrennt ist, so dass die Ausbreitungsrichtung der Laserstrahlung 100 und die Ausbreitungsrichtung der reflektierten Laserstrahlung 101 einen Winkel γ zueinander einschließen. Der Winkel γ kann in einigen Ausführungsformen der Erfindung kleiner als etwa 5°, kleiner als etwa 2°, kleiner als etwa 1° oder kleiner als etwa 0,5° sein. In diesem Fall kann der Laser 10 und der Empfänger 13 jeweils eine eigene zugeordnete Strahlführungseinrichtung 12 aufweisen oder von einer gemeinsamen Strahlführungsvorrichtung 12 bewegt werden, um die Ausbreitungsrichtung der Laserstrahlung 100 und den Akzeptanzbereich des Empfängers 13 an die jeweilige Position des bewegten Objektes 22 bzw. der Teilfläche 23 auf dem bewegten Objekt 22 anzupassen.

Die Kamera 11 kann im Falle der bistatischen Anordnung als separate Baugruppe ortsfest an einer vorgebbaren Stelle positioniert werden. In anderen Ausführungsformen der Erfindung kann die Kamera 11 zusammen mit dem Laser 10 oder dem Empfänger 13 in einem gemeinsamen Gehäuse angeordnet sein. Die Kamera 11 kann in einigen Ausführungsformen der Erfindung über eine optionale Strahlführungseinrichtung der Bewegung des beweglichen Objektes 22 nachgeführt werden.

Fig. 5 zeigt einen Strahlteiler 17, welcher dazu eingerichtet ist, die Ausbreitungsrichtung der Laserstrahlung 100 des Lasers 10 und den Erfassungsbereich 101 des Empfängers 13 zusammenzuführen. Durch die Verwendung des Strahlteilers verläuft der Erfassungsbereich 101 und die Ausbreitungsrichtung der Laserstrahlung 100 auf einer gemeinsamen Achse, so dass ein Parallaxenfehler vermieden werden kann und die Erfassung des bewegten Objektes 22 mit größerer Genauigkeit erfolgen kann.

Selbstverständlich ist Fig. 5 nur beispielhaft zu verstehen, so dass der Strahlteiler 17 auch eine andere Gestalt annehmen kann. Zusätzlich können optionale fokussierende oder defokussierende optische Elemente im Strahlengang vorhanden sein, um die gewünschte Abbildung zu ermöglichen. Sofern der Strahlteiler 17 als bewegliches Element ausgeführt ist, kann dieser auch die Aufgabe der Strahlführungseinrichtung übernehmen und die Laserstrahlung 100 sowie den Erfassungsbereich 101 den Bewegungen des beweglichen Objektes 22 nachführen.

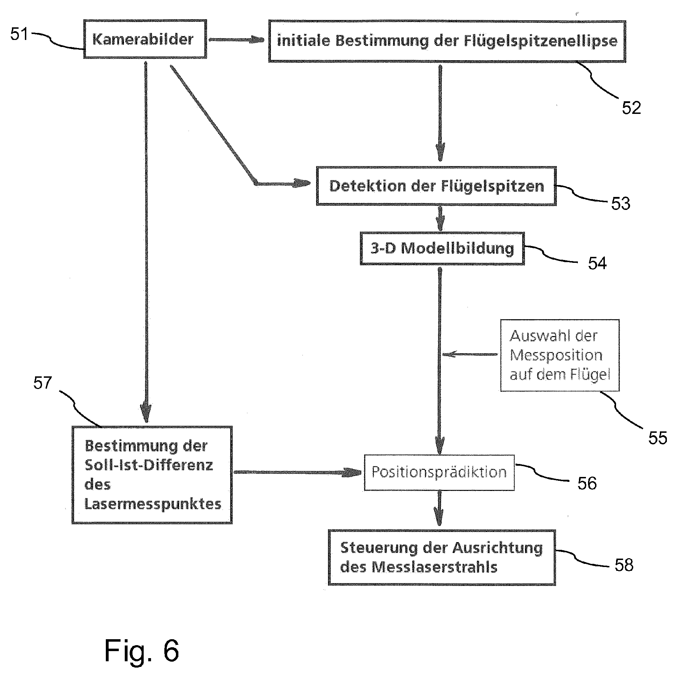

Fig. 6 zeigt ein Flussdiagramm eines Trackingalgorithmus gemäß einer Ausführungsform der Erfindung.

In einem ersten Verfahrensschritt 51 werden mit der Kamera 11 fortlaufend Aufnahmen des zu überwachenden Objektes erfasst. Somit liefert die Kamera 11 einen digitalen Datenstrom, welcher Kamerabilder des Objektes repräsentiert, im dargestellten Ausführungsbeispiel Kamerabilder der Windenergieanlage 2.

Im zweiten Verfahrensschritt 52 wird der Algorithmus initialisiert, d.h. aus zumindest einem zweidimensionalen Kamerabild die Flügelspitzenellipse initial bestimmt. In einigen Ausführungsformen kann dies mit einer Filterkaskade von Bildüberlagerung, Gradientenbildung, Schwellwertbildung und der Anpassung einer mathematischen Ellipse erfolgen.

Im dritten Verfahrensschritt 53 werden in den Kamerabildern fortlaufend die Flügelspitzen detektiert. Die Ergebnisse dieses Verfahrensschrittes werden gespeichert, um eine Datenbasis für den nachfolgenden vierten Verfahrensschritt 54 zu bilden.

Mit der Ansammlung einer ausreichenden Datenbasis wird in einem vierten Verfahrensschritt 54 ein dreidimensionales Modell des zu verfolgenden Gegenstandes errechnet. In einigen Ausführungsformen der Erfindung können die Verfahrensschritte 53 und 54 fortlaufend durchgeführt werden, um das dreidimensionale Modell bei Änderungen der Position oder des Bewegungsmusters des zu verfolgenden Gegenstandes aktuell zu halten.

Im Verfahrensschritt 55 kann eine Messposition gewählt werden. Im dargestellten Ausführungsbeispiel einer Windenergieanlage 2 kann die Messposition bzw. die Teilfläche 23 auf einem der Rotorblätter 22 gewählt werden. Die Messposition 23 kann sich dadurch auszeichnen, dass diese auf einem vorgebbaren Radius um den Drehpunkt des dreidimensionalen Modells liegt und/oder einen bestimmten senkrechten Abstand zu der gedachten Verbindungslinie zwischen Drehpunkt und Blattspitze besitzt, so dass die Messposition 23 sich noch auf der Rotorblattfläche befindet.

Die so erzeugte Positionsprädiktion wird in einem sechsten Verfahrensschritt 56 unter Kenntnis der Beziehung zwischen dem zweidimensionalen Kamerabild und den Ausrichtungsgrößen in Steuersignale zur Ausrichtung des Messlaserstrahls umgesetzt.

Aus der in den Schritten 51 bis 56 ermittelten Position des Messortes 23 kann dann im Verfahrensschritt 58 ein Steuersignal für die Strahlführungseinrichtung generiert werden. Das Verfahren wird zyklisch durchlaufen, so dass die Messung der Schwingung fortlaufend durchgeführt werden kann.

In einem optionalen siebten Verfahrensschritt 57 wird im zweidimensionalen Kamerabild der Lichtpunkt des Lasers 10 bzw. der Lichtpunkt des zweiten Lasers detektiert und der Abstand zwischen dem Lichtpunkt und der Sollposition des Messortes 23 festgestellt. Diese Größe kann Einfluss auf die Positionsprädiktion im Verfahrensschritt 56 nehmen, so dass die Differenz fortlaufend weiter minimiert wird.

## Patentansprüche

1. Vorrichtung (1) zur Messung von Schwingungen zumindest eines bewegten Objektes (22), mit
zumindest einem Laser (10), welcher dazu eingerichtet ist, Laserstrahlung (100) auszusenden, und
zumindest einer Kamera (11), welche dazu eingerichtet ist, das bewegte Objekt (22) zu erfassen, und
zumindest einem Empfänger (13), welcher dazu eingerichtet ist, zumindest einen Teil der Laserstrahlung (100) zu erfassen, **dadurch gekennzeichnet, dass**
die Laserstrahlung (100) mit einer Strahlführungseinrichtung (12) in eine vorgebbare Richtung lenkbar ist und die Vorrichtung (1) weiterhin zumindest eine Nachführeinrichtung (15) enthält, welcher zumindest Bilddaten der Kamera (11) zuführbar sind und mit welcher zumindest ein Ansteuersignal der Strahlführungseinrichtung (12) erzeugbar ist.

2. Vorrichtung nach Anspruch 1, **dadurch gekennzeichnet, dass** die Strahlführungseinrichtung (12) zumindest eine Schwenk-/Neigeeinrichtung (121) und/oder zumindest einen beweglichen Spiegel (122) und/oder zumindest einen räumlichen Lichtmodulator enthält.

3. Vorrichtung nach Anspruch 1 oder 2, **dadurch gekennzeichnet, dass** der Laser (10) und der Empfänger (13) in einer bistatischen Anordnung angeordnet sind.

4. Vorrichtung nach Anspruch 1 oder 2, **dadurch gekennzeichnet, dass** der Laser (10) und der Empfänger (13) in einer monostatischen Anordnung angeordnet sind.

5. Vorrichtung nach einem der Ansprüche 1 bis 4, **dadurch gekennzeichnet, dass** die Laserstrahlung (100) und die Sichtachse (110) der Kamera (11) in Deckung sind.

6. Vorrichtung nach Anspruch 5, **dadurch gekennzeichnet, dass** der Laser (10) und die Kamera (11) über einem Strahlteiler (17) zusammenwirken.

7. Vorrichtung nach Anspruch 5, **dadurch gekennzeichnet, dass** der Laser (10) und die Kamera (11) parallaktisch angeordnet sind.

8. Vorrichtung nach einem der Ansprüche 1 bis 7, **dadurch gekennzeichnet, dass** die Kamera (11) stationär angeordnet ist.

9. Vorrichtung nach einem der Ansprüche 1 bis 8, **dadurch gekennzeichnet, dass** diese eine Phasenregelschleife enthält und/oder dass die Nachführeinrichtung (15) einen Trackingalgorithmus enthält.

10. Vorrichtung (1) nach einem der Ansprüche 1 bis 9,
**dadurch gekennzeichnet, dass** der Empfänger (13) dazu eingerichtet ist, eine Signallaufzeit und/oder Speckleinterferenzen und/oder projizierte Muster zu erkennen.

11. Verfahren zur Messung von Schwingungen zumindest eines bewegten Objektes (22), bei welchem
zumindest ein Laser (10) Laserstrahlung (100) aussendet, und
zumindest eine Kamera (11) das bewegte Objekt (22) erfasst, und
zumindest ein Empfänger (13), zumindest einen Teil (101) der Laserstrahlung (100) erfasst, **dadurch gekennzeichnet, dass**
die Laserstrahlung (100) mit einer Strahlführungseinrichtung (12) in eine vorgebbare Richtung gelenkt wird und die Vorrichtung weiterhin zumindest eine Nachführeinrichtung (15) enthält, welcher zumindest Bilddaten der Kamera (11) zugeführt werden und welche zumindest ein Ansteuersignal der Strahlführungseinrichtung (12) erzeugt.

12. Verfahren nach Anspruch 11, **dadurch gekennzeichnet, dass** die Laserstrahlung (100) und die Sichtachse (110) der Kamera (11) in Deckung sind.

13. Verfahren nach einem der Ansprüche 11 oder 12, **dadurch gekennzeichnet, dass** die Kamera (11) stationär angeordnet ist.

14. Verfahren nach einem der Ansprüche 11 bis 13, **dadurch gekennzeichnet, dass** das Ansteuersignal der Strahlführungseinrichtung (12) mit einer Phasenregelschleife und/oder einem Trackingalgorithmus berechnet wird.

15. Verfahren nach einem der Ansprüche 11 bis 14, **dadurch gekennzeichnet, dass** der Empfänger (13) dazu eingerichtet ist, eine Schwingung des bewegten Gegenstandes (22) durch Messung einer Signallaufzeit und/oder durch Bestimmung von Speckleinterferenzen und/oder durch Auswertung projizierter Muster und/oder durch Auswertung von Signalmodulationsinformation zu erkennen.

## Claims

1. Device (1) for measuring oscillations of at least one moving object (22), comprising
at least one laser (10), which is designed to emit laser radiation (100), and at least one camera (11), which is designed to detect the moving object (22), and
at least one receiver (13), which is designed to detect at least part of the laser radiation (100), **characterized in that**
the laser radiation (100) can be directed in a predeterminable direction by means of a beam guidance apparatus (12) and the device (1) also contains at least one tracking apparatus (15), which can be supplied at least with image data of the camera (11) and by means of which at least one control signal of the beam guidance apparatus (12) can be produced.

2. Device according to claim 1, **characterized in that** the beam guidance apparatus (12) contains at least one swivel/inclination apparatus (121) and/or at least one movable mirror (122) and/or at least one spatial light modulator.

3. Device according to claim 1 or 2, **characterized in that** the laser (10) and the receiver (13) are arranged in a bistatic arrangement.

4. Device according to claim 1 or 2, **characterized in that** the laser (10) and the receiver (13) are arranged in a monostatic arrangement.

5. Device according to any of claims 1 to 4, **characterized in that** the laser radiation (100) coincides with the visual axis (110) of the camera (11).

6. Device according to claim 5, **characterized in that** the laser (10) and the camera (11) cooperate via a beam splitter (17).

7. Device according to claim 5, **characterized in that** the laser (10) and the camera (11) are arranged in parallactic fashion.

8. Device according to any of claims 1 to 7, **characterized in that** the camera (11) is arranged in stationary fashion.

9. Device according to any of claims 1 to 8, **characterized in that** it contains a phase locked loop and/or that the tracking system (15) contains a tracking algorithm.

10. Device (1) according to any of claims 1 to 9, **characterized in that** the receiver (13) is designed to detect a signal propagation time and/or speckle interferences and/or projected patterns.

11. Method for measuring oscillations of at least one moving object (22), in which
at least one laser (10) emits laser radiation (100), and
at least one camera (11) detects the moving object (22), and
at least one receiver (13) detects at least part (101) of the laser radiation (100), **characterized in that**
the laser radiation (100) is directed in a predeterminable direction by means of the beam guidance apparatus (12) and the device also contains at least one tracking system (15), which is supplied at least with image data of the camera (11) and which produces at least one control signal of the beam guidance apparatus (12).

12. Method according to claim 11, **characterized in that** the laser radiation (100) coincides with the visual axis (110) of the camera (11).

13. Method according to any of claims 11 or 12, **characterized in that** the camera (11) is arranged in stationary fashion.

14. Method according to any of claims 11 to 13, **characterized in that** the control signal of the beam guidance apparatus (12) is calculated by means of a phase locked loop and/or a tracking algorithm.

15. Method according to any of claims 11 to 14, **characterized in that** the receiver (13) is designed to detect an oscillation of the moving object (22) by measuring a signal propagation time and/or by determining speckle interferences and/or by evaluating projected patterns and/or by evaluating signal modulation data.

## Revendications

1. Dispositif (1) pour la mesure des oscillations d'au moins un objet (22) en mouvement, avec
au moins un laser (10), qui est conçu pour émettre un rayonnement laser (100), et
au moins une caméra (11), qui est conçue pour détecter l'objet en mouvement (22), et
au moins un récepteur (13), qui est conçu pour détecter au moins une partie du rayonnement laser (100), **caractérisé en ce que** le rayonnement laser (100) est susceptible d'être dévié au moyen d'un dispositif de guidage de rayonnement (12) vers une direction prédéterminée, et le dispositif (1) contient en outre au moins un dispositif de réajustement (15) auquel au moins des données d'imagerie de la caméra (11) peuvent être amenées et au moyen duquel au moins un signal de pilotage du dispositif de guidage de rayonnement (12) peut être engendré.

2. Dispositif selon la revendication 1, **caractérisé en ce que** le dispositif de guidage de rayonnement (12) contient au moins un dispositif de pivotement/inclinaison (121) et/ou au moins un miroir mobile (122) et/ou au moins un modulateur de lumière spatial.

3. Dispositif selon la revendication 1 ou 2, **caractérisé en ce que** le laser (10) et le récepteur (13) sont agencés dans un agencement bistatique.

4. Dispositif selon la revendication 1 ou 2, **caractérisé en ce que** le laser (10) et le récepteur (13) sont agencés dans un agencement monostatique.

5. Dispositif selon l'une des revendications 1 à 4, **caractérisé en ce que** le rayonnement laser (100) et l'axe de vision (110) de la caméra (11) sont en coïncidence.

6. Dispositif selon la revendication 5, **caractérisé en ce que** le laser (10) et la caméra (11) coopèrent via un diviseur de rayonnement (17).

7. Dispositif selon la revendication 5, **caractérisé en ce que** le laser (10) et la caméra (11) sont agencés suivant une parallaxe.

8. Dispositif selon l'une des revendications 1 à 7, **caractérisé en ce que** la caméra (11) est agencée stationnaire.

9. Dispositif selon l'une des revendications 1 à 8, **caractérisé en ce que** celui-ci contient une boucle de régulation de phase et/ou **en ce que** le dispositif de réajustement (15) contient un algorithme de suivi.

10. Dispositif (1) selon l'une des revendications 1 à 9, **caractérisé en ce que** le récepteur (13) est conçu pour reconnaître un temps de parcours du signal et/ou des interférences de tavelures et/ou des motifs projetés.

11. Procédé pour la mesure des oscillations d'au moins un objet (22) en mouvement, dans lequel
au moins un laser (10) émet un rayonnement laser (100), et
au moins une caméra (11) détecte l'objet en mouvement (22), et
au moins un récepteur (13) détecte au moins une partie (101) du rayonnement laser (100), **caractérisé en ce que**
le rayonnement laser (100) est dévié dans une direction prédéterminée au moyen d'un dispositif de guidage de rayonnement (12), et le dispositif contient en outre au moins un dispositif de réajustement (15) auquel peuvent être amenées au moins des données d'imagerie de la caméra (11) et lequel engendre au moins un signal de pilotage du dispositif de guidage de rayonnement (12).

12. Procédé selon la revendication 11, **caractérisé en ce que** le rayonnement laser (100) et l'axe de vision (110) de la caméra (11) sont en coïncidence.

13. Procédé selon l'une des revendications 11 ou 12, **caractérisé en ce que** la caméra (11) est agencée stationnaire.

14. Procédé selon l'une des revendications 11 à 13, **caractérisé en ce que** le signal de pilotage du dispositif de guidage de rayonnement (12) est calculé avec une boucle de régulation de phase et/ou avec un algorithme de suivi.

15. Procédé selon l'une des revendications 11 à 14, **caractérisé en ce que** le récepteur (13) est conçu pour reconnaître une oscillation de l'objet en mouvement (22) par mesure d'un temps de parcours du signal et/ou par détermination d'interférences de tavelures et/ou par évaluation de motifs projetés et/ou par évaluation d'informations de modulation du signal.
